Europäisches Patentamt

European Patent Office

Office européen des brevets

(11) Veröffentlichungsnummer : **0 093 833**
**B1**

(12) **EUROPÄISCHE PATENTSCHRIFT**

(45) Veröffentlichungstag der Patentschrift :
**10.09.86**

(51) Int. Cl.⁴ : **B 65 G 69/18**

(21) Anmeldenummer : **83100943.6**

(22) Anmeldetag : **01.02.83**

(54) **Vorrichtung zum Absaugen von Staub der beim Einschütten eines Schüttguts in eine Gosse entsteht.**

(30) Priorität : **10.05.82 DE 3217542**

(43) Veröffentlichungstag der Anmeldung :
**16.11.83 Patentblatt 83/46**

(45) Bekanntmachung des Hinweises auf die Patenterteilung : **10.09.86 Patentblatt 86/37**

(84) Benannte Vertragsstaaten :
**AT BE CH DE FR GB IT LI LU NL SE**

(56) Entgegenhaltungen :
**DE-A- 2 519 773**
**DE-A- 2 525 703**
**DE-B- 2 411 653**

(73) Patentinhaber : **Schmidt, Willibald**
**An der Hermannsleite 8**
**D-8078 Eichstätt-Landershofen (DE)**

(72) Erfinder : **Schmidt, Willibald**
**An der Hermannsleite 8**
**D-8078 Eichstätt-Landershofen (DE)**

(74) Vertreter : **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820**
**D-8000 München 86 (DE)**

**Beschreibung**

Die Erfindung betrifft eine Vorrichtung nach dem Oberbegriff des Anspruchs 1.

Bei einer nach der DE-OS-25 19 773 bekannten Vorrichtung dieser Art befinden sich die Ansaugschlitze in einer Abdeckklappe für die Gosse, die beim Einschütten von Schüttgut in die Gosse hochzuklappen ist und deren freier Rand an einen gekippten Kasten auf einem Fahrzeug, aus dem das Schüttgut ausgeschüttet wird, anzulehnen ist. Diese Abdeckklappe muß also jeweils vor dem Einschütten von Schüttgut in die Gosse angehoben und danach wieder auf die Gosse abgesenkt werden.

Aufgabe der Erfindung ist es, eine Vorrichtung nach dem Oberbegriff des Anspruchs 1 anzugeben, die ohne Schwierigkeit an einer Seite der Gosse aufzustellen ist und vor sowie nach dem Einschütten des Schüttguts in die Gosse nicht bewegt zu werden braucht.

Die Lösung dieser Aufgabe ist im Kennzeichen des Anspruchs 1 angegeben.

Um die Filteranordnung reinigen zu können, etwa dadurch, daß der Saugstrom in einen Druckstrom umgekehrt wird oder dadurch, daß eine Rüttelvorrichtung für die Filteranrodnung vorgesehen ist, ist bevorzugt eine Ausbildung gemäß Anspruch 2 vorgesehen. Beim Reinigen der Filteranordnung wird der obere Ansaugschlitz geschlossen, so daß der abgereinigte Staub nach unten fällt.

Besonders wirksame Maßnahmen zur Abförderung des von der Filteranordnung beim Reinigen herabfallenden Staubs sind in den Ansprüchen 3 und 4 angegeben.

Eine besonders wirtschaftliche Filteranordnung ist in Anspruch 5 angegeben.

Um zu verhindern, daß allenfalls noch entweichender Staub aus einer Halle dringen kann, in der sich die Gosse befindet, sind bevorzugt die Maßnahmen nach Anspruch 6 vorgesehen.

Eine weitere Abdichtung der Halle ergibt sich aus den Maßnahmen nach Anspruch 7.

Um bei laufendem Betrieb mindestens jeweils eine Filteranordnung reinigen zu können, ist bevorzugt eine Ausbildung gemäß Anspruch 8 vorgesehen.

Die Erfindung wird im folgenden an drei Ausführungsbeispielen unter Hinweis auf die beigefügten Zeichnungen beschrieben.

Gleiche Bezugsziffern bezeichnen gleiche oder im wesentlichen gleiche Teile.

Figur 1 zeigt eine erste Ausführungsform der Vorrichtung oberhalb einer Seitenwand einer Gosse, wobei auf der der Vorrichtung gegenüberliegenden Seite der Gosse eine Schräglauframpe für ein zu entleerendes Fahrzeug vorgesehen ist.

Figur 2 zeigt eine der Fig. 1 ähnliche Vorrichtung in einer Halle.

Figur 3 zeigt eine dritte Ausführungsform der Vorrichtung, ebenfalls in einer Halle.

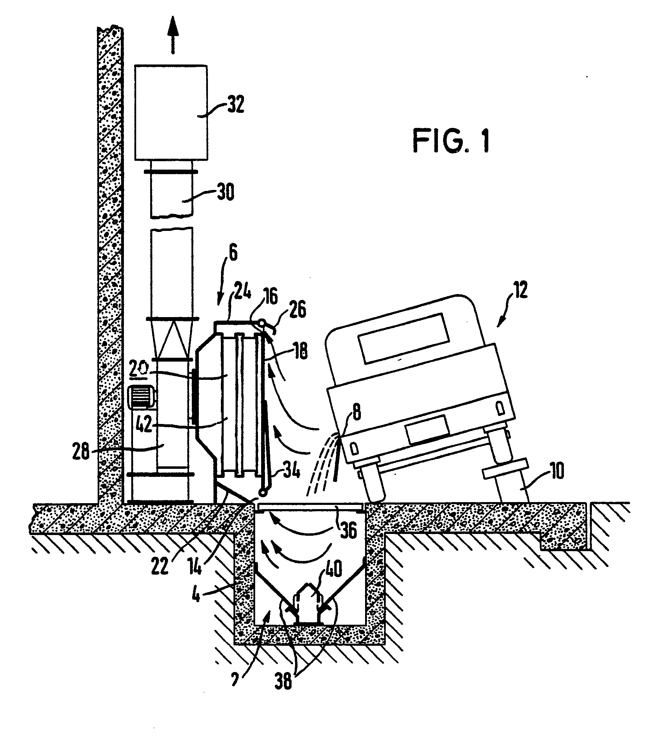

Figur 1 zeigt im Querschnitt eine Gosse 2, oberhalb deren Seitenwand 4 eine Absaugeinrichtung 6 angeordnet ist. Unterhalb der Abschüttkante 8 des durch die Schräglauframpe 10 schräggestellten Fahrzeugs 12 ist ein sich längs der Gosse 2 erstreckender unterer Ansaugschlitz 14 vorgesehen und oberhalb der Abschüttkante 8 ein sich längs der Gosse 2 erstreckender oberer Ansaugschlitz 16.

Der untere Ansaugschlitz 14 ist oben und der obere Ansaugschlitz 16 ist unten durch eine Wand 18 begrenzt, hinter der sich eine Filteranordnung 20 befindet. Der untere Ansaugschlitz 14 ist unten durch die Kante einer unterhalb der Filteranordnung 20 schräg zur Gosse 2 abfallenden Platte 22 begrenzt. Der obere Ansaugschlitz 16 ist oben durch eine Deckwand 24 der Filteranordnung 20 begrenzt. Der obere Ansaugschlitz 16 ist durch eine Klappe 26 verschließbar. An die Rückseite der Filteranordnung 20 ist ein Gebläse 28, etwa ein Radial- oder Axialventilator, angesetzt, der angesaugte Luft nach oben durch eine Leitung 30 in eine Sammelleitung 32 abführt.

An die Unterkante der Wand 18 ist ein Deckel 34 angelenkt, mit dem die Gosse 2, etwa beim Abreinigen der Filteranordnung 20, verschließbar ist. Die Öffnung der Gosse 2 ist durch einen befahrbaren Rost 36 abgedeckt. Der Boden der Gosse ist als eine Auffangrinne 38 ausgebildet, von der aufgefangener Staub mit einer Abfördereinrichtung 40 abzuführen ist.

Die Filteranordnung enthält als Filterelemente vertikal verlaufende Filterschläuche 42. Fig. 1 zeigt den Zustand der Absaugeinrichtung beim Entleeren des Fahrzeugs 12. Soll die Filteranordnung 20 gereinigt werden, so wird die Klappe 26 und gegebenenfalls auch der Deckel 34 geschlossen und die Filterschläuche 42 werden abgeklopft, abgerüttelt oder mittels des Gebläses 28 rückgespült. Der Staub fällt dann von den Filterschläuchen 42 auf die Schrägplatte 22, von dort auf die Auffangrinne 38 und wird schließlich mit der Abfördereinrichtung 40 abgeführt.

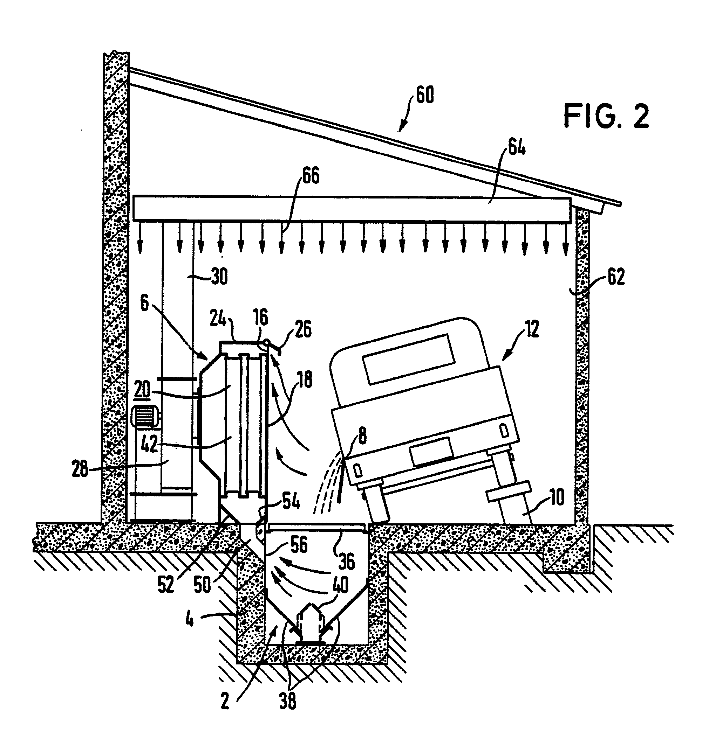

Die Ausführungsform nach Fig. 2 unterscheidet sich von derjenigen nach Fig. 1 im wesentlichen darin, daß durch die Seitenwand 4 die Gosse 2 wenigstens ein abgeknickter Kanal 50 geführt ist, der vertikal nach oben in dem Raum unterhalb der Filterschläuche 42 mündet und von den Filterschläuchen 42 herabfallenden Staub aufnimmt, weil dieser Staub durch Schrägflächen 52, 54 in ihn geleitet werden. Dementsprechend liegt der untere Ansaugschlitz 56 tiefer als bei der Ausführungsform nach Fig. 1.

Außerdem ist eine Halle 60 mit einem Tor 62 angedeutet. Nächst der Oberkante des Tors 62 verläuft eine Verteilerleitung 64 für die von dem Gebläse 28 durch die Leitung 30 abgeführte Luft. In dieser Verteilerleitung 64 befinden sich unten eine Reihe von als Düsen wirkenden Öffnungen, aus denen die von dem Gebläse 28 abgeführte Luft nach unten in Richtung der Pfeile 66 austritt und dadurch im Torbereich einen abdichtenden Schleier bildet.

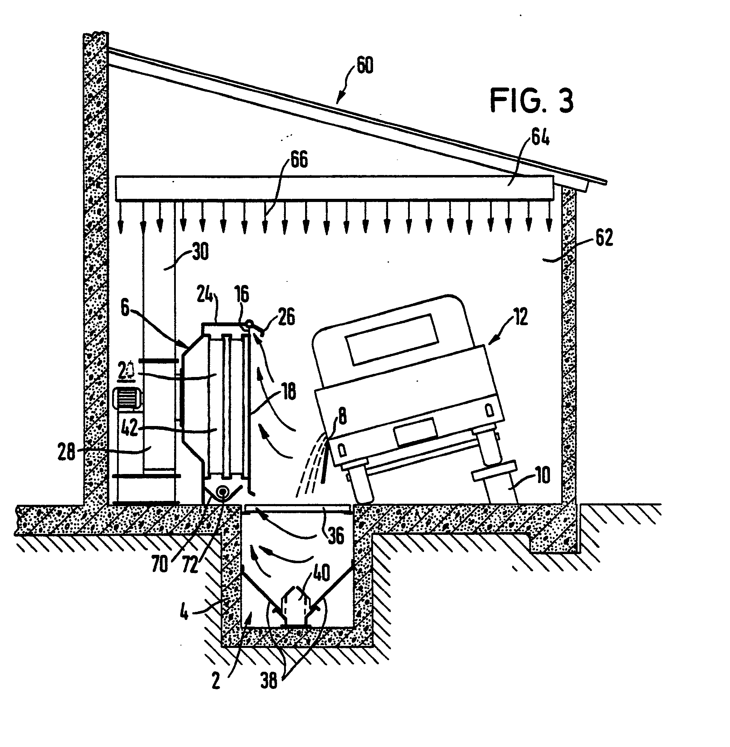

Bei der Ausführungsform nach Fig. 3 ist über dem Boden der Filteranordnung 20 eine Auffangrinne 70 mit einer Abfördereinrichtung 72 für von der Filteranordnung abfallenden Staub vorgesehen. Im übrigen ist die Ausbildung im wesentlichen gleich der nach Fig. 1 in Kombination mit der Halle nach Fig. 2. Die Abfördereinrichtung 40 über dem Boden der Gosse 2 kann in diesem Fall allein zum Abfördern des Schüttguts verwendet werden. Die Gosse 2 kann in nach der DE-OS 25 25 703 bekannter Weise mit Pendelklappen abgedeckt werden. Die Pendelklappen können um längs oder quer zur Richtung der Gosse verlaufende Achsen angeordnet sein. Sie brauchen nicht die gesamte Gosse abzudecken. Bei breiten Gossen ist es ausreichend und zweckmäßig, wenn die Pendelkappen nur die Gossenöffnung auf der der Abzugseinrichtung abgewandten Seite abdecken.

Um eine gleichmäßige Luftverteilung über die gesamte Länge der Gosse zu erhalten, erstreckt sich die Absaugeinrichtung 6 bevorzugt über die ganze Länge der Gosse 2.

**Patentansprüche**

1. Vorrichtung zum Absaugen von Staub, der beim Einschütten von Schüttgut in eine Gosse (2) entsteht, bei der oberhalb einer Seitenwand (4) der Gosse (2) eine Absaugeinrichtung (6) angeordnet ist, die unterhalb der Einschütthöhe (8) des Schüttguts wenigstens einen sich längs der Gosse (2) erstreckenden unteren Ansaugschlitz (14, 56) und oberhalb der Einschütthöhe (8) des Schüttguts wenigstens eine sich ebenfalls längs der Gosse (2) erstreckenden oberen Ansaugschlitz (16) aufweist, dadurch gekennzeichnet, daß der obere Ansaugschlitz (16) unten durch eine vertikale Wand (18) begrenzt ist, hinter der sich eine Filteranordnung (20) befindet, der untere Ausaugschlitz (14, 56) oben durch entweder die vertikale Wand (18) oder einen die vertikale Wand (18) fortsetzenden Teil der Seitenwand (4) der Gosse (2) begrenzt ist, und daß der obere Ansaugschlitz (16) oben durch eine Deckwand (24) der Filteranordnung (20) begrenzt ist.

2. Vorrichtung nach Anspruch 1, dadurch gekennzeichnet, daß der obere Ansaugschlitz (16) verschließbar ist und daß die Filteranordnung (20) derart ausgebildet ist, daß von ihr aufgenommener Staub in Richtung zum Boden der Absaugeinrichtung (6) fallen kann.

3. Vorrichtung nach Anspruch 2, dadurch gekennzeichnet, daß der Boden (22, 52, 54) der Absaugeinrichtung (6) schräg nach unten zum unteren Ansaugschlitz (14, 56) abfällt und der Boden der Gosse (2) als eine Auffangrinne (38) ausgebildet ist, von der aufgefangener Staub mit einer Abfördereinrichtung (40) abzuführen ist.

4. Vorrichtung nach Anspruch 2, dadurch gekennzeichnet, daß über dem Boden der Absaugeinrichtung (6) eine Auffangrinne (70) mit einer Abfördereinrichtung (72) für von der Filteranordnung (20) abfallenden Staub vorgesehen ist.

5. Vorrichtung nach einem der vorgenannten Ansprüche, dadurch gekennzeichnet, daß die Filteranordnung (20) durch vertikal verlaufende Filterschläuche (42) gebildet ist.

6. Vorrichtung nach einem der vorgenannten Ansprüche, dadurch gekennzeichnet, daß sich die Gosse (2) in einer abgedeckten Halle (60) mit wenigstens einem Tor (62) befindet, nächst dessen Oberkante nach unten gerichtete, von der Abluft der Absaugeinrichtung (6) gespeiste Düsen (66) angeordnet sind.

7. Vorrichtung nach Anspruch 6, dadurch gekennzeichnet, daß wenigstens ein Teil des Öffnungsbereichs des Tors (62) mit einem flexiblen Vorhand abgedeckt ist.

8. Vorrichtung nach einem der vorgenannten Ansprüche, dadurch gekennzeichnet, daß die Absaugeinrichtung (6) in Längsrichtung der Gosse (2) mehrere, getrennt voneinander in Betrieb zu setzende Filteranordnungen (20) mit ihnen zugeordneten Ansaugschlitzen (14, 16, 56) aufweist.

9. Vorrichtung nach einem der vorgenannten Ansprüche, dadurch gekennzeichnet, daß sich die Absaugeinrichtung (6) über die ganze Länge der Gosse (2) erstreckt.

**Claims**

1. Device for sucking away dust which occurs in the tipping of loose bulk material into a waste drain (2), in which above one side wall (4) of the waste drain (2) there is arranged a suction device (6) which comprises at least one lower suction slot (14, 56) extending along the waste drain (2) below the tip-in level (8) of the loose bulk material and at least one upper suction slot (16) likewise extending along the waste drain (2) above the tip-in level (8) of the loose bulk material, characterised in that the upper suction slot (16) is downwardly limited by a vertical wall (18), behing which a filter arrangement (20) is situated, the lower suction slot (14, 56) is upwardly limited by either the vertical wall (18) or a part of the side wall (4) of the waste drain (2) continuing the vertical wall (18), and in that the upper suction slot (16) is upwardly limited by a covering wall (24) of the filter arrangement (20).

2. Device according to Claim 1, characterised in that the upper suction slot (16) is closable and in that the filter arrangement (20) is formed in such a way that dust collected by it can fall in the direction towards the bottom of the suction device (6).

3. Device according to Claim 2, characterised in that the bottom (22, 52, 54) of the suction device (6) falls away obliquely down to the lower suction slot (14, 56) and the bottom of the waste drain (2) is formed as a collecting channel (38) from which collected dust can be conducted away with a conveyor device (40).

4. Device according to Claim 2, characterised in that above the bottom of the suction device (6) there is provided a collecting channel (70) with a conveyor device (72) for dust falling from the filter arrangement (20).

5. Device according to one of the preceding Claims characterised in that the filter arrangement (20) is formed by vertically extending filter hoses (42).

6. Device according to one of the preceding Claims, characterised in that the waste drain (2) is situated in a covered hall (60) having at least one gate (62) close to the upper edge of which there are arranged downwardly directed nozzles (66) fed by the exhaust air of the suction device (6).

7. Device according to Claim 6, characterized in that at least a part of the opening region of the gate (62) is covered with a flexible curtain.

8. Device according to one of the preceding Claims, characterized in that the suction device (6) comprises, in the longitudinal direction of the waste drain (2), a plurality of filter arrangements (20) settable in operation seperately from one another, with suction slots (14, 16, 56) allocated to them.

9. Device according to one of the preceding Claims, characterised in that the suction device (6) extends over the entire length of the waste drain (2).

**Revendications**

1. Dispositif pour aspirer de la poussière se dégageant lors du déversement d'un matériau en vrac dans une rigole (2), dans lequel un dispositif d'aspiration (6), situé au-dessus d'une paroi latérale (4) de la rigole (2), présente, au-dessous de la hauteur de déversement (8) du matériau en vrac, au moins une fente inférieure d'aspiration (14, 56) s'étendant le long de la rigole (2) et, au-dessus de la hauteur de déversement (8) du matériau en vrac, au moins une fente supérieure d'aspiration (16) s'étendant également le long de la rigole (2), caractérisé par le fait que la fente supérieure d'aspiration (16) est délimitée en partie basse par une paroi verticale (18) derrière laquelle se trouve un groupe de filtration (20) ; par le fait que la fente inférieure d'aspiration (14, 56) est délimitée en partie haute soit par la paroi verticale (18), soit par une partie de la paroi latérale (4) de la rigole (2) située dans le prolongement de cette paroi verticale (18) ; et par le fait que la fente supérieure d'aspiration (16) est délimitée en partie haute par une paroi de recouvrement (24) du groupe de filtration (20).

2. Dispositif selon la revendication 1, caractérisé par le fait que la fente supérieure d'aspiration (16) peut être obturée ; et par le fait que le groupe de filtration (20) est réalisé de telle sorte que la poussière qu'il recueille puisse chuter en direction du fond du dispositif d'aspiration (6).

3. Dispositif selon la revendication 2, caractérisé par le fait que le fond (22, 52, 54) du dispositif d'aspiration (6) est incliné vers le bas en direction de la fente inférieure d'aspiration (14, 56), le fond de la rigole (2) étant réalisé sous la forme d'une gouttière collectrice (38), à partir de laquelle de la poussière recueillie doit être évacuée par un dispositif d'élimination (40).

4. Dispositif selon la revendication 2, caractérisé par le fait qu'il est prévu, au-dessus du fond du dispositif d'aspiration (6), une gouttière collectrice (70) munie d'un dispositif (72) d'élimination de poussière chutant du groupe de filtration (20).

5. Dispositif selon l'une des revendications précitées, caractérisé par le fait que le groupe de filtration (20) est formé par des flexibles de filtration (42) s'étendant verticalement.

6. Dispositif selon l'une des revendications précitées, caractérisé par le fait que la rigole (2) se trouve dans une galerie (60) formant recouvrement et présentant au moins une porte (62), à proximité de l'arête supérieure de laquelle sont disposées des buses (66) dirigées vers le bas et alimentées par l'air évacué par le dispositif d'aspiration (6).

7. Dispositif selon la revendication 6, caractérisé par le fait qu'au moins une partie de la zone d'ouverture de la porte (62) est recouverte par un rideau souple.

8. Dispositif selon l'une des revendications précitées, caractérisé par le fait que le dispositif d'aspiration (6) comprend, dans le sens longitudinal de la rigole (2), plusieurs groupes de filtration (20) devant être mis en fonction séparément les uns des autres, avec des fentes d'aspiration (14, 16, 56) qui leur sont associées.

9. Dispositif selon l'une des revendications précitées, caractérisé par le fait que le dispositif d'aspiration (6) s'étend sur toute la longueur de la rigole (2).

FIG. 1

FIG. 2

FIG. 3